# EUROPÄISCHE PATENTSCHRIFT

(11) **EP 3 004 001 B1**
(45) Veröffentlichungstag und Bekanntmachung des Hinweises auf die Patenterteilung: **18.07.2018**
(21) Anmeldenummer: 14710805.4
(22) Anmeldetag: 12.03.2014
(51) Int. Cl.: C03B 37/014, B01B 1/00, C03B 19/14

(54) **VERFAHREN ZUR HERSTELLUNG VON SYNTHETISCHEM QUARZGLAS**
METHOD FOR PRODUCING SYNTHETIC FUSED QUARTZ
PROCEDE DE PRODUCTION DE VERRE DE SILICE SYNTHETIQUE

(30) Priorität: 24.05.2013 DE 102013209673
(43) Veröffentlichungstag der Anmeldung: 13.04.2016
(73) Patentinhaber: Heraeus Quarzglas GmbH & Co. KG, 63450 Hanau (DE)
(72) Erfinder: BADEKE, Klaus-Uwe, 06193 Petersberg-Sennewitz (DE); TROMMER, Martin, 06749 Bitterfeld (DE)
(74) Vertreter: Uexküll & Stolberg
(86) Internationale Anmeldenummer: PCT/EP2014/000660
(87) Internationale Veröffentlichungsnummer: WO 2014/187513

(56) Entgegenhaltungen:
- EP-A2- 0 719 575
- WO-A1-2013/087751
- JP-A- H08 131 812
- US-A1- 2003 234 455
- US-A1- 2012 276 291

## Beschreibung

Die Erfindung betrifft ein Verfahren zur Herstellung von Quarzglas.

Zur Herstellung von hochreinem synthetischem Quarzglas werden halogenhaltige und halogenfreie Siliciumverbindungen als Ausgangsmaterialien eingesetzt. Halogenhaltige Einsatzmaterialien wie Siliciumtetrachlorid (SiCl₄) haben den Nachteil, dass bei ihrer Verwendung korrosive Säuren wie z.B. Salzsäure (HCl) als Nebenprodukte entstehen. Aus diesem Grund werden zunehmend halogenfreie Materialien verwendet, wobei derzeit Polyalkylsiloxane im Mittelpunkt des Interesses stehen.

Gemäß US 5,043,002 eignen sich besonders Polymethylcyclosiloxane wie Hexamethylcyclotrisiloxan (HMCTS), Octamethylcyclotetrasiloxan (OMCTS) und Decamethylcyclopentasiloxan (DMCTS) zur Herstellung von hochreinem Siliziumdioxid für optische Lichtleiter. Die Siloxane werden in einer Brennerflamme in Anwesenheit von Sauerstoff zu SiO₂ oxidiert, das in Form von feinteiligen, amorphen Partikeln anfällt, die als Silica-Ruß bezeichnet werden. Der SiO₂-Ruß wird gesammelt und zu einem Glas verschmolzen, welches als Ausgangsmaterial für faseroptische Vorformen oder für optische Bauteile verwendet werden kann.

Die US 5,356,451 offenbart Verdampfer, die sich zum Verdampfen von halogenhaltigen und halogenfreien Siliciumverbindungen eignen sollen. Die zu verdampfende Flüssigkeit wird als dünne Schicht auf eine geneigte Fläche aufgebracht. Die Fläche wird erhitzt, so dass die Flüssigkeit beim Hinablaufen der Fläche verdampft.

Ein Nachteil der Polymethylcyclosiloxane ist, dass diese zur Bildung von Harzen und Gelen neigen, die zur Verschmutzung von Wärmeaustauscherflächen und Brennern sowie zur Verstopfung von Rohrleitungen führen. Harze und Gele entstehen beispielsweise bei der hydrolytischen Ringöffnung der cyclischen Polyalkylsiloxane zu linearen Siloxanen mit endständigen Hydroxylgruppen (Silanole), die eine deutlich geringere Volatilität als die cyclischen Verbindungen haben und sich im System ablagern. Die Silanole sind reaktiv und reagieren mit Cyclosiloxanmolekülen zu gelförmigen Polymerisationsprodukten. Silanole können auch in Spuren als Verunreinigungen im Ausgangsmaterial enthalten sein.

Die EP 0 719 575 A2 offenbart einen Verdampfer für halogenfreie Siliciumverbindungen, bei dem Gele in einem Sumpf aufgefangen werden, um die Verschmutzung von Verdampferflächen und ein Verstopfen von Rohrleitungen zu verhindern. Der Verdampfer weist eine vertikal ausgerichtete Verdampfungskammer auf, in welche die zu verdampfenden Substanzen eingesprüht werden. Ein Teil der vorerhitzten Flüssigkeit verdampft beim Eintritt in den Verdampfer auf Grund des Druckabfalls, ein weiterer Teil beim Auftreffen auf die erhitzten Verdampferwände. Die beim Verdampfen entstehenden Gele werden im unteren Teil des Verdampfers aufgefangen und periodisch entfernt. Die Düsen zum Versprühen der Flüssigkeit sind so angeordnet, dass sie die im Sumpf des Verdampfers angesammelten Gele nicht mitreißen.

Gemäß US 6,312,656 soll die Bildung von Gelen dadurch verhindert werden, dass die Polyalkylsiloxane nicht verdampft sondern in flüssiger Form direkt in die Brennerflamme eingesprüht werden. Die mit dem Verdampfen verbundene Temperaturbelastung, welche die Bildung von Gelen begünstigt, wird so vermieden.

Die US 5,879,649 offenbart Polyalkylsiloxane mit einem Siedpunkt von unter 250°C, die weniger als 14 ppm an hoch siedenden Verunreinigungen mit Siedepunkten über 250°C enthalten. Diese Verunreinigungen lassen sich aufgrund ihrer hohen Siedepunkte nur schlecht verdampfen und sammeln sich im Verdampfer an, wo sie zu gelförmigen Ablagerungen reagieren. Die Aufreinigung der Polyalkylsiloxane erfolgt durch Destillation und anschließende Filtration des Destillats über Aktivkohle und Molekularsiebe.

Die US 2012/0276291 A1 offenbart ein Verfahren zum Verdampfen von Polyalkylsiloxanen, bei dem die zu verdampfende Flüssigkeit auf die vertikalen Wände einer Verdampfungskammer gerichtet wird. Die Wände der Verdampfungskammer werden so hoch erhitzt, dass ein Teil der Flüssigkeit verdampft. Die restliche Flüssigkeit fließt an den Wänden entlang zum Boden der Kammer und wird dort kontinuierlich entnommen. Im Verdampfer gebildete Gele werden zusammen mit dieser Flüssigkeit aus der Kammer gespült.

Die WO 2013/087751 A1 offenbart ein Verfahren zur Herstellung von synthetischem Quarzglas unter Verwendung eines Polyalkylsiloxans als Einsatzmaterial. Das Polyalkylsiloxan wird verdampft, indem es in Form von Tröpfchen mit einem Durchmesser von weniger als 5 µm in einen Trägergasstrom mit einer Temperatur von mehr als 180°C gesprüht wird.

Trotz zahlreicher Bemühungen stellt die Gelbildung bei der Herstellung von hochreinem Quarzglas nach wie vor ein großes Problem dar. Die Gele können sich im Verdampfer und in den Rohrleitungen anreichern und die Prozessstabilität beeinträchtigen. Dies gilt insbesondere bei der Herstellung von Glasfasern, da hier bereits geringe Unregelmäßigkeiten die Weiterverarbeitung der Glasrohlinge zu Fasern erheblich beeinträchtigen. Zudem ist sowohl die Aufreinigung von Ausgangsmaterialien als auch die Reinigung von Verdampfern und Anlagen mit einem erheblichen Aufwand verbunden.

Der Erfindung liegt die Aufgabe zu Grunde, ein Verfahren zur Herstellung von Quarzglas zur Verfügung zu stellen, durch das die oben beschriebenen Probleme vermieden werden. Insbesondere soll der Aufwand, der mit der Reinigung von Verdampfern und Anlagen in Folge der Gelbildung verbunden ist, soweit wie möglich minimiert werden.

Erfindungsgemäß wird diese Aufgabe durch ein Verfahren zur Herstellung von Quarzglas gelöst, bei dem
(a) man ein geeignetes flüssiges Ausgangsmaterial verdampft, indem man es in eine vertikal angeordnete Verdampfungskammer eines Verdampfers sprüht,
(b) man das dampfförmige Ausgangsmaterial zu SiO₂ oxidiert, und
(c) man das SiO₂ auffängt, wobei
das Verfahren dadurch gekennzeichnet ist, dass man das zu verdampfende Ausgangsmaterial am Boden der Verdampfungskammer einsprüht und man das dampfförmige Ausgangsmaterial am Kopfende der Verdampfungskammer entnimmt, wobei der Verdampfer so konstruiert ist, dass sich in der Kammer abscheidende Komponenten am Boden des Verdampfers ansammeln und erneut versprüht werden.

Das in Schritt (c) gesammelte SiO₂ wird zur Bildung eines Glasrohlings vorzugsweise in einem weiteren Verfahrensschritt (d) getrocknet und in einem Schritt (e) einer Hitzebehandlung zur Verglasung unterworfen. Der Rohling kann anschließend in einem Schritt (f) weiterverarbeitet werden, z.B. zu Glasfasern.

Als flüssige Ausgangsmaterialien werden Polymethylcyclosiloxane verwendet, die zur Bildung von Gelen durch Polymerisation neigen und die zur Herstellung von SiO₂ geeignet sind. Bevorzugt sind Hexamethylcyclotrisiloxan (D3), Octamethylcyclotetrasiloxan (D4), Decamethylcyclopentasiloxan (D5) oder Dodecamethylcyclohexasiloxan (D6). Ein ganz besonders bevorzugtes Ausgangsmaterial ist Octamethylcyclotetrasiloxan (OMCTS; D4). Die Abkürzungen D3, D4, D5 usw. sind von der Firma General Electric eingeführte Bezeichnungen für Siloxane, wobei D für die Gruppe [(CH₃)₂Si]-O- steht.

Es ist generell bevorzugt, das jeweilige Ausgangsmaterial in möglichst reiner Form zu verwenden, da der Verdampfungsprozess auf den Siedepunkt des Ausgangsmaterials abgestimmt wird. Das Ausgangsmaterial kann geringe Mengen an höher oder niedriger siedenden Komponenten enthalten. Beispielsweise kann das erfindungsgemäß bevorzugte Octamethylcyclotetrasiloxan (OMCTS; D4) bis zu 2 Gew.-% D3 und/oder bis zu 5 Gew.-% D5 enthalten. Der Gehalt an höhermolekularen Verbindungen wie D7, D8, D9 usw. beträgt vorzugsweise nicht mehr als 30 bis 100 ppm.

Die Temperatur in der Verdampfungskammer wird auf das Ausgangsmaterial abgestimmt und liegt bei OMCTS (Siedepunkt 171 bis 175°C; wenn nicht anders angegeben beziehen sich alle Angaben hierin auf Normaldruck) vorzugsweise im Bereich von 130° bis 230°C, besonders bevorzugt 140° bis 190°C und ganz besonders bevorzugt 150 bis 180°C.

Das Ausgangsmaterial wird vorzugsweise zusammen mit einem Trägergas in die Verdampfungskammer eingesprüht. Als Trägergas wird vorzugsweise ein inertes Gas verwendet, besonders bevorzugt Stickstoff. Es ist jedoch auch möglich, als Trägergas Sauerstoff zu verwenden oder dem Trägergas Sauerstoff beizumischen, der zur späteren Oxidation der Polyalkylsiloxane benötigt wird.

Das molare Verhältnis von Ausgangsmaterial zu Trägergas liegt vorzugsweise in einem Bereich von 0,01 bis 2, besonders bevorzugt 0,05 bis 1 und ganz besonders bevorzugt 0,1 bis 0,75. Hierdurch wird unter anderem das Verdampfen höher siedender Polymethylcyclosiloxane im Ausgangsmaterial erleichtert, beispielsweise von D7 (Siedepunkt 276°C).

Das Trägergas hat vorzugsweise einen Wassergehalt von maximal 30 Vol.-ppm, besonders bevorzugt weniger als 10 Vol.-ppm.

Das dampfförmige Polyalkylsiloxan bzw. das Gemisch aus Trägergas und dampfförmigen Polyalkylsiloxan wird am Kopfende der Verdampfungskammer entnommen und in einen Brenner geleitet. Vor dem Einleiten in den Brenner wird das dampfförmige Material bzw. die Mischung aus dampfförmigem Material und Trägergas vorzugweise mit Sauerstoff gemischt. Im Brenner wird das Polyalkylsiloxan zu SiO₂ oxidiert. Es bildet sich feinteiliges, amorphes SiO₂ (SiO₂-Ruß), das in Form einer porösen Masse abgeschieden wird. Um eine vollständige Oxidation des Polyalkylsiloxans zu gewährleisten, wird im Brenner vorzugsweise weiterer Sauerstoff zugeführt. Die Zuführung kann über separate Düsen erfolgen.

Gemäß einer alternativen Ausführungsform werden der Dampf bzw. die Dampf/Trägergasmischung und der Sauerstoff dem Brenner getrennt zugeführt und erst im Brenner miteinander gemischt.

Der Brenner wird vorzugsweise zusätzlich mit einem Brennstoff beschickt, vorzugsweise mit Methan und besonders bevorzugt mit Wasserstoff, dessen Verbrennung eine Zündflamme ergibt, in welche der Dampf bzw. die Dampf/Trägergasmischung eingeleitet wird.

Der SiO₂-Ruß wird auf einer geeigneten Ablagerungsfläche, vorzugsweise auf einem rotierenden Trägerrohr abgeschieden. Hierbei wird ein poröser SiO₂-Körper erhalten, der auch als Sootkörper bezeichnet wird. Der Sootkörper wird in Schritt (d) getrocknet und durch eine anschließende Temperaturbehandlung (e) in einen Quarzglasrohling überführt. Die Trocknung erfolgt vorzugsweise bei einer Temperatur von 800 bis 1100°C. Danach wird der getrocknete Sootkörper durch Erhitzen auf eine Temperatur im Bereich von 1400 bis 1500°C verglast, d.h. zu einem Glasrohling gesintert. Das Trocknen des porösen SiO₂-Körpers erfolgt vorzugsweise in einer Atmosphäre aus Chlorgas und einem inerten Gas, das Sintern wird vorzugsweise in einer Inertgasatmosphäre, besonders bevorzugt im Vakuum durchgeführt. In beiden Fällen sind jeweils Helium oder Stickstoff als Inertgas bevorzugt. Der Glasrohling kann anschließend weiterverarbeitet werden, beispielsweise indem er zu Glasfasern ausgezogen wird.

Zur Durchführung des Verfahrens eignet sich besonders ein Verdampfer, der eine vertikal ausgerichtete Verdampfungskammer (2), die durch Wände 2g, 2d und 2e begrenzt wird, eine Zerstäuberdüse (3), die am Boden des Verdampfers angeordnet ist und die zum Versprühen des flüssigen Ausgangsmaterial (4) in den Verdampfungsraum (2f) dient, und einen Auslass (8) aufweist, der am Kopfende des Verdampfers angeordnet ist, wobei der Verdampfer so konstruiert ist, dass sich in der Kammer abscheidende Komponenten am Boden des Verdampfers ansammeln und erneut versprüht werden.
Fig. 1 ist ein Schnittbild eines erfindungsgemäß geeigneten Verdampfers.
Fig. 2 ist ein Schnittbild einer alternativen Ausführungsform eines erfindungsgemäß geeigneten Verdampfers.
Fig. 3 zeigt einen Zwischenboden des erfindungsgemäß geeigneten Verdampfers in Draufsicht.
Fig. 4 ist ein Schnittbild des Bodenbereichs eines erfindungsgemäß geeigneten Verdampfers.
Fig. 5 ist ein Schnittbild eines alternativ gestalteten Bodenbereichs eines erfindungsgemäß geeigneten Verdampfers.

Beim Verdampfen von Polyalkylsiloxanen lässt sich die Bildung von Gelen und harzförmigen Verunreinigung praktisch nicht vollständig unterdrücken. Zur Vermeidung von Betriebstörungen durch Ablagerungen in der Anlage und zur Vermeidung von Qualitätsbeeinträchtigungen bei der Herstellung von Quarzglas ist ein Abtrennen solcher Verunreinigungen vom Dampfstrom daher unerlässlich. Erfindungsgemäß werden Gele und harzförmige Verunreinigungen im Verdampfer zurückgehalten.

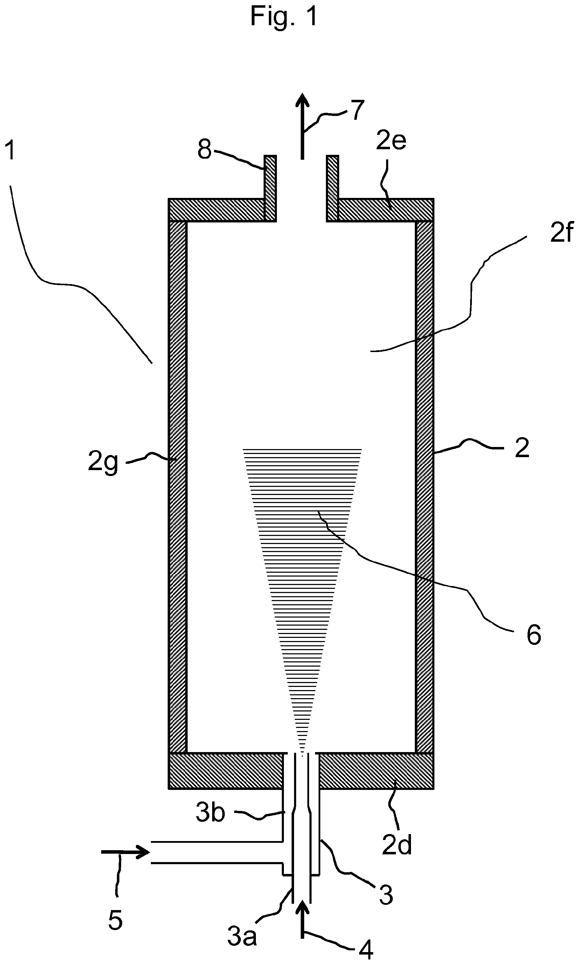

Figur 1 zeigt ein Schnittbild eines erfindungsgemäß bevorzugten Verdampfers 1 mit einer zylindrischen Verdampfungskammer 2. Die Verdampfungskammer 2 wird durch eine Mantelfläche 2g, eine Bodenplatte 2d und einen Deckel 2e begrenzt. Innerhalb der Kammer befindet sich ein freier Verdampfungsraum 2f. Der in Figur 1 gezeigte Verdampfer weist eine Zweistoffsprühdüse 3 auf, die am Boden des Verdampfers angeordnet ist. Die Düse 3 hat eine innere Düse 3a und eine äußere Düse 3b, welche die innere Düse ringförmig umgibt. Das flüssige Ausgangsmaterial 4 wird der inneren Düse 3a zugeführt und das Trägergas 5 der äußeren Düse 3b. Trägergas und Einsatzmaterial werden zu einem Sprühnebel 6 versprüht. Die Flüssigkeit wird senkrecht nach oben in den Verdampfungsraum 2f gesprüht. Bei der gezeigten Ausführungsform werden das Trägergas 5 und die zu verdampfende Flüssigkeit 4 nach dem Flüssigkeitsdruckprinzip in Form eines Nebels in der Kammer 2f versprüht. Am Kopfende des Verdampfers wird über den Auslass 8 eine Mischung 7 aus dampfförmigem Einsatzmaterial und Trägergas entnommen.

Nicht verdampfte Anteile des Ausgangsmaterials und im Verdampfer gebildete Kondensate bleiben beim Verdampfen der flüchtigen Komponenten zurück und sinken zu Boden, oder sie schlagen sich an den Kammerwänden nieder und fließen, solange sie bei der Verdampfertemperatur fließfähig sind, an diesen entlang nach unten. In Folge der Schwerkraft sammeln sich diese Rückstände auf dem Boden der Kammer an.

Ein wesentlicher Aspekt des erfindungsgemäßen Verfahrens ist, dass die Rückstände, die sich am Kammerboden angesammelt haben, erneut versprüht werden. Sie werden vorzugsweise vom einströmenden Gasstrom mitgerissen und dabei in Form feiner Tröpfchen in der Verdampfungskammer verteilt. Zum Versprühen der Abscheidungen können zusätzliche Düsen vorgesehen sein, die z.B. mit Trägergas beschickt werden. Das erneute Versprühen hat zur Folge, dass verdampfbare Anteile der Rückstände, wie beispielsweise kondensiertes Ausgangsmaterial, im Sprühkegel verdampfen und dem Brenner zugeführt werden können. Auf diese Weise wird die Menge an Ablagerungen in der Kammer reduziert.

Komponenten, deren Siedepunkt so hoch ist, dass sie unter den im Verdampfer herrschenden Bedingungen nicht verdampfen, scheiden sich erneut ab und sammeln sich an den Wänden und auf dem Boden der Kammer an. Hierbei handelt es sich in der Regel um hochmolekulare Verbindungen, die durch Ringöffnung und Polymerisation aus cyclischen Polyalkylsiloxanen gebildet werden. Die Polymerisation wird primär durch Verunreinigungen initiiert, die im flüssigen Einsatzmaterial enthalten sind. Hauptsächlich handelt es sich dabei um Silanole, Wasser, Basen, Säuren und Chloride. Das Vorhandensein derartiger Verunreinigungen ist technisch unvermeidbar. Die Abscheidungen haben anfangs eine viskose Konsistenz und sind unter den Verdampferbedingungen fließfähig. Durch das wiederholte Versprühen dieser Gele wird eine weitere Reaktion der Polymerisationsprodukte begünstigt, so dass deren Molekulargewicht zunimmt. Hierbei nimmt die Fließfähigkeit der Verbindungen naturgemäß ab und wird schließlich so groß, dass die Ablagerungen nach dem Abscheiden an den Wänden nicht mehr zum Boden der Kammer fließen können. Das erfindungsgemäße Verfahren zeichnet sich somit dadurch aus, dass fließfähigen Anteile so lange im Kreislauf geführt werden, bis sie durch wiederholte Reaktion eine gummiartige Konsistenz annehmen und immobil werden (immobile Rückstände).

Während des Betriebes bildet sich an Wänden und Böden der Verdampfungskammer in Folge dieses Prozesses eine hochviskose Polymerschicht aus. Es hat sich herausgestellt, dass diese Schicht den Verdampfungsprozess nicht stört und dass der Verdampfer trotz Ausbildung dieser Schicht über lange Zeiträume ohne Unterbrechung betrieben werden kann. Die gummiartigen Polymere sind weitgehend inert. Sie können im Verdampfer verbleiben und im Rahmen von ohnehin erforderlichen Wartungs- und Prüfarbeiten entfernt werden. Mit einem erfindungsgemäßen Verdampfer konnten bei einem Verdampfervolumen von ca. 10 l mehr als 8 t OMCTS verdampft werden, ohne dass nennenswerte Ablagerungen im Verdampfer gebildet wurden. Die mittlere Dicke der Polymerschicht lag unter 70 µm. Die Bildung eines Sumpfes wurde nicht beobachtet.

Im Gegensatz zu den immobilen Rückständen enthalten die Rückstände, die unter den Verdampfertemperaturen fließfähig sind (mobile Rückstände), noch reaktive Komponenten und können weiter polymerisieren. Diese mobilen Rückstände werden beim Verdampfen der Polyalkylsiloxane kontinuierlich nachgebildet.

Es hat sich gezeigt, dass der Anteil an Harzen und Gelen in der am Kopfende der Kammer entnommenen Dampfphase erstaunlich gering ist. Es wird angenommen, dass dies auf das Versprühen der mobilen Rückstände zurückzuführen ist. Diese enthalten lineare Siloxane mit endständigen Hydroxylgruppen, die mit Verunreinigungen reagieren können. Durch das Versprühen der mobilen Rückstände in Form kleiner Tröpfchen wird deren Oberfläche vergrößert und der Kontakt mit dem eintretenden Gasstrom verbessert. Im Gasstrom vorhandene Verunreinigungen werden von den Tröpfchen absorbiert und durch Reaktion gebunden.

Letztendlich werden die Verunreinigungen in Form einer hochviskosen, immobilen Polymerschicht im Verdampfer abgeschieden. Da diese Schicht den Verdampfungsprozess nicht behindert, kann der Verdampfer über lange Zeiträume ohne Unterbrechung betrieben werden. Zur weiteren Verlängerung der unterbrechungsfreien Betriebdauer kann der Verdampfer mit Einbauten versehen werden, die die innere Oberfläche und damit die Abscheidungsfläche für immobile Ablagerungen vergrößern. Die Einbauten haben vorzugsweise die Form von Platten oder Scheiben, die in den Verdampfer eingesetzt werden können. Größe und Form der Platten und Scheiben werden an Form und Größe des Verdampfers angepasst. Besonders bevorzugt sind Platten oder Scheiben, die auf Zwischenböden des Verdampfers aufgelegt werden können. Vorteilhaft sind z.B. Metallnetze oder - siebe, beispielsweise aus Streckmetall.

Der erfindungsgemäß geeignete Verdampfer erlaubt die Bereitstellung von dampfförmigen Polyalkylsiloxanen mit hoher Reinheit, die sich gut zu SiO₂-Körpern verarbeiten lassen. Die SiO₂-Körper ergeben nach Trocknung und Hitzebehandlung defektfreie Glasrohlinge, die sich besonders zur Herstellung von Glasfasern eignen. Durch das erfindungsgemäße Verfahren wird die Menge an Ablagerungen im Verdampfer minimiert und gleichzeitig die Reinheit der dampfförmigen Polyalkylsiloxane maximiert.

Das Einsprühen der Ausgangsmaterialien in den Verdampfer wird bevorzugt so gesteuert, dass ein großer Teil der Flüssigkeit verdampft, ohne mit den Wänden der Verdampfungskammer in Kontakt zu kommen. Das Versprühen der Polyalkylsiloxane erfolgt bevorzugt durch Ein- oder besonders bevorzugt Zweistoffdüsen, die am Boden der Verdampfungskammer angeordnet sind und welche die Flüssigkeit senkrecht nach oben in die freie Kammer versprühen. Dabei ist der Sprühkegel bevorzugt so ausgelegt, dass ein Wandkontakt der Tröpfchen minimiert wird. Die zu verdampfende Flüssigkeit wird zu möglichst kleinen Tröpfchen verdüst. Die mittlere Tröpfchengröße (mittlerer volumetrischer Durchmesser der Tröpfchen) liegt vorzugsweise in einem Bereich von 5 µm bis 200 pm, besonders bevorzugt 10 bis 150 µm und ganz besonders bevorzugt 20 bis 100 µm. Durch die Bildung eines feinen Sprühnebels wird ein schnelles Verdampfen der Flüssigkeit erreicht und eine hohe Temperaturbelastung des flüssigen Ausgangsmaterials vermieden. Die Tröpfchen nehmen während der Flugphase Wärme aus dem Verdampfer auf und verdampfen weitgehend ohne Wandkontakt. Die restliche Flüssigkeit verdampft beim Kontakt mit den Wänden der Verdampfungskammer.

Gemäß einer bevorzugten Ausführungsform wird die Flüssigkeit mit Hilfe eines Trägergases versprüht. Durch die Anwesenheit des Trägergases wird der Taupunkt abgesenkt. Bei der Verwendung eines Trägergases wird vorzugsweise eine Zweistoffdüse eingesetzt, wie sie in Fig. 1 bei 3 schematisch gezeigt ist.

Erfindungsgemäß werden vorzugsweise Pneumatik-Zerstäuberdüsen eingesetzt. Bei den Pneumatik-Zerstäuberdüsen dient die Zufuhr von Gas dem zusätzlichen Aufreißen des Flüssigkeitsstroms in feinste Tropfen. Es können Injektordüsen oder vorzugsweise Druckmischdüsen verwendet werden.

Bei Injektordüsen werden Flüssigkeit und Gas dadurch miteinander vermischt, dass ein Medium als Treibmedium wirkt und das zweite Medium (nach dem Venturi-Prinzip) in den Mischraum einsaugt. Beide Medien verlassen die Düse als Gemisch.

Bei Druckmischdüsen werden beide Medien, d.h. Gas und Flüssigkeit, der Düse unter Druck zugeführt (Flüssigkeitsdruckprinzip).

Bei Druckmischdüsen kann die Mischung der Medien innerhalb oder außerhalb des Düsenkörpers erfolgen. Bei innenmischenden Mischdüsen werden beide Medien in einem Mischraum vermischt. Das Gemisch verlässt die Düsenmündung z.B. als Hohlkegel. Bei den außenmischenden Mischdüsen treffen beide Medien erst nach dem Düsenaustritt zusammen. Die Vermischung wird durch das Ineinandersprühen zweier Sprühkegel bewirkt.

Außenmischende Düsen eignen sich besonders zur Zerstäubung viskoser und zur Verschmutzung neigender Medien und sind daher bevorzugt. Außenmischende Düsen haben außerdem den Vorteil, dass sich die Medienzuführungen nicht gegenseitig beeinflussen. Vorzugweise wird eine außenmischende Zweistoffdüse eingesetzt, die mehrere ringförmig angeordnete Austrittsöffnungen aufweist.

Generell sind Düsen mit einer kegelförmigen Sprühform bevorzugt, insbesondere mit einer Vollkegelsprühform.

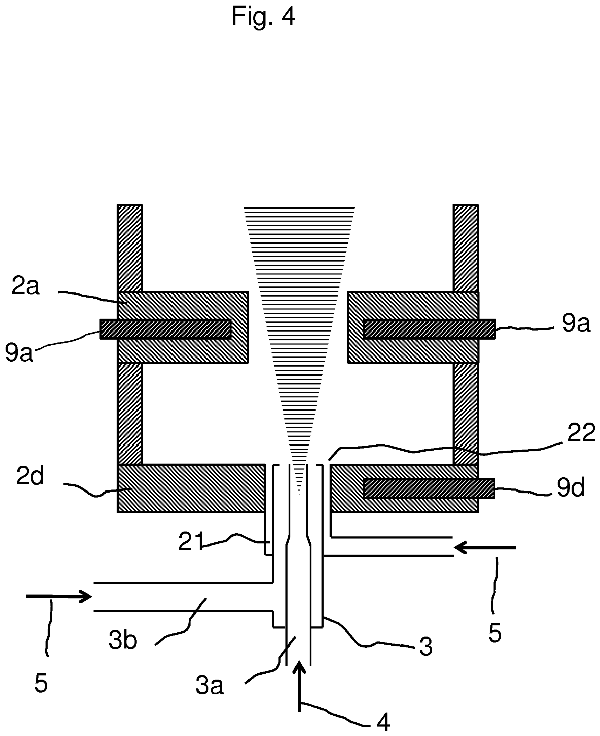

Um das Aufwirbeln und Versprühen von Sumpfrückständen zu verbessern, können eine oder mehrere weitere Düsen 21 vorgesehen werden (Figur 4). Beispielsweise können die Zerstäuberdüse 3 von einer weiteren ringförmigen Düse oder einem Kranz von Düsen umgeben sein, über die Trägergas eingeleitet wird. Diese Düse(n) wird (werden) vorzugsweise in einer ringförmigen Vertiefung angeordnet. Da sich mobilen Rückstände bevorzugt in Vertiefungen ansammeln, lassen sich auf diese Weise Sumpfrückstände gezielt aufwirbeln und versprühen. Die ringförmige Anordnung der Austrittsöffnungen hat den Vorteil, dass die Sumpfrückstände vom äußeren Gasstrom mitgerissen und versprüht werden, ohne das Versprühen des Ausgangsmaterials durch die innen liegenden Düsen zu behindern.

Bei der Verwendung von mehreren Düsen oder von Mehrstoffdüsen werden bevorzugt mindestens 20 % und vorzugsweise mindestens 50 % des in den Verdampfer eingeführten Trägergases zur Verdüsung der Flüssigkeit verwendet. Das restliche Trägergas kann zum Aufwirbeln des Sumpfmaterials eingesetzt werden.

Um das Verdampfen zu beschleunigen, wird das Einsatzmaterial vorzugsweise vorgewärmt. Die Temperatur richtet sich nach dem Einsatzmaterial und liegt bei OMCTS vorzugsweise in einem Bereich von 60°C bis 175°C, besonders bevorzugt 100°C bis 160°C.

Das Trägergas wird vorzugsweise auf eine Temperatur von 100 bis 250°C, besonders bevorzugt 130 bis 240°C und ganz besonders bevorzugt 150°C bis 220°C erwärmt.

Vorzugsweise wird auch der Verdampfer selbst erhitzt. Dies kann durch Heizelemente in den Wänden und/oder Böden des Verdampfers oder durch in die Verdampferkammer eingesetzte Heizelemente geschehen. Zur Erhitzung können erhitzte Fluide wie z.B. erhitzte Flüssigkeiten oder vorzugsweise elektrische Heizelemente verwendet werden. Vorzugsweise erfolgt die Beheizung hauptsächlich und ganz besonders bevorzugt ausschließlich über die Böden, d.h. die Bodenplatte 2d, den Deckel 2e und/oder optionale Zwischenböden, wobei elektrische beheizte Böden besonders geeignet sind.

Vorzugsweise werden mindestens 80% der Heizleistung über die Böden eingetragen. Über die Mantelfläche werden vorzugsweise maximal 20% der Heizleistung eingetragen, wobei es bevorzugt ist, die Mantelfläche nicht zusätzlich zu beheizen.

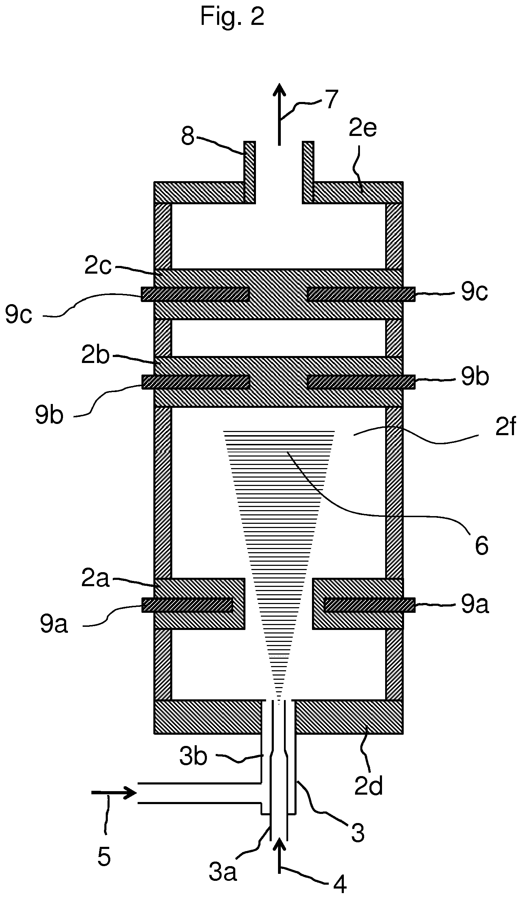

In Figur 2 ist eine bevorzugte Ausführungsform eines erfindungsgemäß geeigneten Verdampfers gezeigt, die neben der Bodenplatte 2d und dem Deckel 2e drei beheizbare Zwischenböden 2a, 2b und 2c aufweist. Vorzugsweise weist der Verdampfer mindestens einen und besonders bevorzugt 2 bis 10 und ganz besonders bevorzugt 3 bis 6 beheizbare Zwischenböden auf. Die Zwischenböden sind jeweils mit Heizelementen 9a, 9b und 9c bestückt, über die die Böden elektrisch beheizt werden können. Der aus der Düse 3 austretende Sprühnebel wird durch eine zentrale Öffnung des ersten Zwischenbodens 2a in den offenen inneren Raum 2f gesprüht.

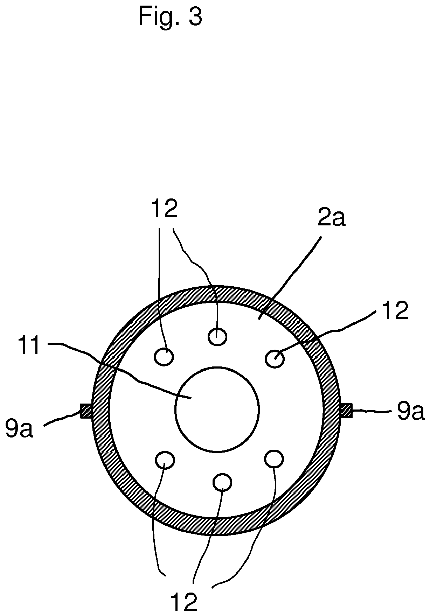

Die Zwischenböden 2a, 2b und 2c weisen eine oder mehrere Öffnungen auf, um zu gewährleisten, dass der Dampf nach oben und Kondensat und andere Ablagerungen nach unten abfließen können. Fig. 3 zeigt eine Draufsicht auf den Zwischenboden 2a. Der Boden hat neben der zentralen Öffnung 11 zusätzliche Bohrungen 12, die ein Abfließen von Abscheidungen erleichtern.

Der Boden des Verdampfers kann in verschiedener Art und weise ausgeführt werden. Beispielsweise kann der Verdampfer eine Bodenplatte mit konisch abgesenkter Innenfläche oder einer flachen Innenfläche aufweisen.

Figur 4 zeigt eine vergrößerte Ansicht des Bodenbereichs eines erfindungsgemäß geeigneten Verdampfers mit einer flachen inneren Bodenfläche. Bei dieser Ausführungsform enthält auch die Bodenplatte 2d mindestens ein Heizelement 9d. Die Einspritzdüse 3 ist eine Zweistoffdüse. Das Polyalkylsiloxan wird der Düse über den Einlass 3a zugeführt, das Trägergas über den Einlass 3b. Zusätzlich ist eine weitere Düse 21 vorgesehen, über die Trägergas in den Verdampfer geleitet werden kann. Das Trägergas tritt über eine oder mehrere Öffnungen 22 in den Verdampfer ein, die ringförmig um den Auslass der Zweistoffdüse 3 angeordnet sind.

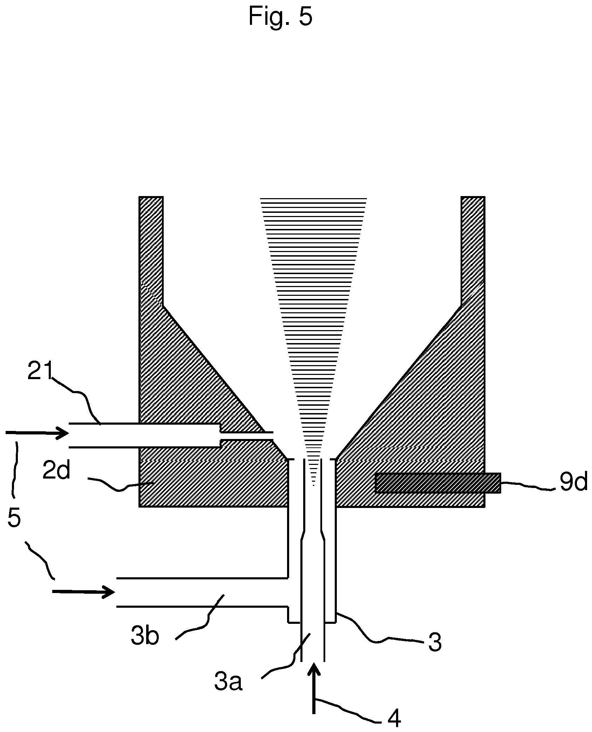

Figur 5 zeigt eine weitere Ausführungsform der Bodenplatte 2d mit einem Heizelement 9d eines erfindungsgemäß geeigneten Verdampfers. Die Bodenplatte weist eine konusförmige Aussparung auf, durch die Kondensat und gelförmige Produkte aufgegangen werden. Sie fließen zur Einspritzdüse 3, wo sie vom eintretenden Gasstrom mitgerissen werden. Über die Düse 21 kann zusätzliches Trägergas zur Aufwirblung der Sumpfprodukte eingeleitet werden.

## Patentansprüche

1. Verfahren zur Herstellung von Quarzglas, bei dem
(a) man ein Polymethylcyclosiloxan als Ausgangsmaterial verdampft, indem man es in eine vertikal angeordnete Verdampfungskammer sprüht,
(b) man das dampfförmige Ausgangsmaterial zu SiO₂ oxidiert und
(c) man das SiO₂ auffängt,
**dadurch gekennzeichnet, dass**
man das zu verdampfende Ausgangsmaterial am Boden der Verdampfungskammer einsprüht und man das dampfförmige Ausgangsmaterial am Kopfende der Verdampfungskammer entnimmt, wobei die Verdampfungskammer so konstruiert ist, dass sich in der Kammer abscheidende Komponenten am Boden des Verdampfers ansammeln und erneut versprüht werden.

2. Verfahren nach Anspruch 1, bei dem
(d) man das gesammelte SiO₂ trocknet und
(e) zur Bildung eines Glasrohlings einer Hitzebehandlung unterzieht.

3. Verfahren nach Anspruch 1 oder 2, bei dem man als Polymethylcyclosiloxan Hexamethylcyclotrisiloxan, Octamethylcyclotetrasiloxan, Decamethylcyclopentasiloxan oder Dodecamethylcyclohexasiloxan verwendet.

4. Verfahren nach einem der Ansprüche 1 bis 3, bei dem die Temperatur in der Verdampfungskammer im Bereich von 130°C bis 230°C liegt.

5. Verfahren nach einem der Ansprüche 1 bis 4, bei dem man das flüssige Ausgangsmaterial zusammen mit einem Trägergas in die Verdampfungskammer einbringt.

6. Verfahren nach Anspruch 5, bei dem man als Trägergas ein inertes Gas verwendet.

7. Verfahren nach einem der Ansprüche 1 bis 6, bei dem das molare Verhältnis von Ausgangsmaterial zu Trägergas im Bereich von 0,01 bis 2 liegt.

8. Verfahren nach einem der Ansprüche 1 bis 7, bei dem man das gebildete dampfförmige Ausgangsmaterial mit Sauerstoff mischt, man die Gasmischung in einen Brenner einleitet und dort unter Bildung von SiO₂ verbrennt.

9. Verfahren nach Anspruch 8, bei dem man zusätzlich einen geeigneten Brennstoff in den Brenner einleitet.

10. Verfahren nach Anspruch 9, bei dem man als Brennstoff Wasserstoff verwendet.

11. Verfahren nach einem der Ansprüche 5 bis 10, bei dem man das flüssige Ausgangsmaterial und das Trägergas über eine Zweistoffdüse in die Verdampfungskammer einbringt.

12. Verfahren nach Anspruch 11, bei dem die Zweistoffdüse eine Druckmischdüse ist, vorzugsweise eine außenmischende Mischdüse.

13. Verfahren nach einem der Ansprüche 11 bis 12, bei dem die Zweistoffdüse ringförmig angeordnete Austrittsöffnungen aufweist.

14. Verfahren nach Anspruch 13, bei dem die Öffnungen der Zweistoffdüse von einer weiteren ringförmigen Düse oder einem Kranz von Düsen umgeben sind, über die Trägergas eingeleitet wird.

## Claims

1. Process for manufacturing quartz glass, in which process
(a) the starting material, a polymethylcyclosiloxane, is evaporated by spraying it into a vertically arranged evaporation chamber,
(b) the vaporous starting material is oxidised to SiO₂ and
(c) the SiO₂ is collected,
**characterised in that**
the starting material to be evaporated is sprayed in at the bottom of the evaporation chamber and the vaporous starting material is removed at the top end of the evaporation chamber, wherein the evaporation chamber is constructed in such a manner that components that separate out in the chamber accumulate at the bottom of the evaporator and are sprayed again.

2. Process according to claim 1, in which process
(d) the collected SiO₂ is dried and
(e) subjected to a heat treatment in order to form a glass blank.

3. Process according to claim 1 or 2, in which process hexamethylcyclotrisiloxane, octamethylcyclotetrasiloxane, decamethylcyclopentasiloxane or dodecamethylcyclohexasiloxane is used as the polymethylcyclosiloxane.

4. Process according to one of claims 1 to 3, in which process the temperature in the evaporation chamber is in the range between 130 °C to 230 °C.

5. Process according to one of claims 1 to 4, in which process the liquid starting material is introduced together with a carrier gas into the evaporation chamber.

6. Process according to claim 5, in which process an inert gas is used as the carrier gas.

7. Process according to one of claims 1 to 6, in which process the molar ratio of starting material to carrier gas is between 0.01 to 2.

8. Process according to one of claims 1 to 7, in which process the vaporised starting material is mixed with oxygen, the gaseous mixture is fed into a burner and burnt therein thereby affording SiO₂.

9. Process according to claim 8, in which process a suitable fuel is additionally fed into the burner.

10. Process according to claim 9, in which process hydrogen is used as the fuel.

11. Process according to one of claims 5 to 10, in which process the liquid starting material and the carrier gas are introduced through a two-substance nozzle into the evaporation chamber.

12. Process according to claim 11, in which process the two-substance nozzle is a pressure-mix nozzle, preferably an external mix mixing nozzle.

13. Process according to one of claims 11 to 12, in which process the two-substance nozzle possesses circular discharge openings.

14. Process according to claim 13, in which process the openings of the two-substance nozzle are surrounded by a further circular nozzle or by an annulus of nozzles, through which the carrier gas is fed.

## Revendications

1. Procédé pour la production de verre de quartz, dans lequel
(a) on vaporise un polyméthylcyclosiloxane en tant que produit de départ, en le pulvérisant dans une chambre de vaporisation disposée verticalement,
(b) on oxyde en SiO₂ le produit de départ à l'état de vapeur et
(c) on recueille le SiO₂,
***caractérisé en ce***
**qu'**on pulvérise le produit de départ à vaporiser sur le fond de la chambre de vaporisation et on prélève le produit de départ à l'état de vapeur au sommet de la chambre de vaporisation, la chambre de vaporisation étant construite de telle façon que les composants qui se déposent dans la chambre s'accumulent sur le fond du vaporiseur et sont pulvérisés de nouveau.

2. Procédé selon la revendication 1, dans lequel
(d) on sèche le SiO₂ collecté et
(e) pour la formation d'une ébauche de verre on le soumet à un traitement par la chaleur.

3. Procédé selon la revendication 1 ou 2, dans lequel en tant que polyméthylcyclosiloxane on utilise de l'hexaméthylcyclotrisiloxane, de l'octaméthylcyclotétrasiloxane, du décaméthylcyclopentasiloxane ou du dodécaméthylcyclohexasiloxane.

4. Procédé selon l'une quelconque des revendications 1 à 3, dans lequel la température dans la chambre de vaporisation se situe dans la plage de 130 °C à 230 °C.

5. Procédé selon l'une quelconque des revendications 1 à 4, dans lequel on introduit dans la chambre de vaporisation le produit de départ liquide conjointement avec un gaz vecteur.

6. Procédé selon la revendication 5, dans lequel en tant que gaz vecteur on utilise un gaz inerte.

7. Procédé selon l'une quelconque des revendications 1 à 6, dans lequel le rapport molaire du produit de départ au gaz vecteur se situe dans la plage de 0,01 à 2.

8. Procédé selon l'une quelconque des revendications 1 à 7, dans lequel on mélange avec de l'oxygène le produit de départ formé, à l'état de vapeur, on introduit le mélange gazeux dans un brûleur et dans ce dernier on le fait brûler avec formation de SiO₂.

9. Procédé selon la revendication 8, dans lequel on introduit en outre dans le brûleur un combustible approprié.

10. Procédé selon la revendication 9, dans lequel en tant que combustible on utilise de l'hydrogène.

11. Procédé selon l'une quelconque des revendications 5 à 10, dans lequel on introduit dans la chambre de vaporisation le produit de départ liquide et le gaz vecteur via une buse binaire.

12. Procédé selon la revendication 11, dans lequel la buse binaire est une buse mélangeuse à pression, de préférence une buse mélangeuse à mélange externe.

13. Procédé selon l'une quelconque des revendications 11 et 12, dans lequel la buse binaire comporte des orifices de sortie en disposition annulaire.

14. Procédé selon la revendication 13, dans lequel les orifices de la buse binaire sont entourés d'une autre buse annulaire ou d'une couronne de buses, par laquelle est introduit le gaz vecteur.
